# EUROPÄISCHE PATENTANMELDUNG

(11) **EP 2 022 665 A2**
(43) Veröffentlichungstag der Anmeldung: **11.02.2009**
(21) Anmeldenummer: 08161927.2
(22) Anmeldetag: 06.08.2008
(51) Int. Cl.: B60N 2/44

(54) **Pneumatisches Stellelement**

(30) Priorität: 07.08.2007 DE 202007010957 U
(71) Anmelder: Alfmeier Präzision AG Baugruppen und Systemlösungen, 91757 Treuchtlingen (DE)
(72) Erfinder: Köpfer, Markus, 73495 Stödtlen (DE); Bäuerle, Matthias, 91717 Wassertrüdingen (DE); Wielgosz, Gerd, 91171 Greding (DE); Aeugle, Torsten, 91801 Markt Berolzheim (DE)
(74) Vertreter: Mörtel & Höfner

(57) **Zusammenfassung**

Ein pneumatisches Stellelement (6) umfasst eine wenigstens zwei Blasenwände (24a,b) aufweisende, zur Konturverstellung (22a,b) eines Fahrzeugsitzes (2) befüllbare Sitzblase (8). Die Sitzblase (8) ist zumindest teilweise aus einem Verbundmaterial aus einer dehnbaren Grundschicht (28) und einem dehnbaren Faserelement (30) aufgebaut, wobei das Faserelement (30) im Inneren (52) und/oder bezüglich der Sitzblase (8) an der Außenseite (32) des Grundmaterials (28) angeordnet ist.

## Beschreibung

Die Erfindung betrifft ein pneumatisches Stellelement.

Derartige pneumatische Stellelemente dienen zur Verstellung der Sitzkontur eines Kraftfahrzeugs. Sie weisen eine elastische Blase bzw. Sitzblase auf, welche mit einem Medium, z.B. Luft, befüllbar ist. Durch Befüllen oder Entleeren ändert die Sitzblase ihre Größe, hierdurch wird die Konturverstellung des Fahrzeugsitzes bewirkt. Z.B. wölbt sich die Sitzblase beim Befüllen in Richtung der Sitzoberfläche vor, wodurch die auf dem Fahrzeugsitz sitzende Person an der entsprechenden Stelle stärker unterstützt wird. Derartige Sitzblasen sind in der Regel kissenförmig und weisen damit wenigstens zwei Blasenwände, nämlich an ihrer Vorder- oder Rückseite auf. Die Vorderseite ist in der Regel der Sitzoberfläche zugewandt, die Rückseite stützt sich im Inneren des Sitzes an einer Struktur ab, um einen Gegendruck zu erzeugen.

Die Blasenwände der genannten Sitzblasen sind heute in der Regel aus thermoplastischem Polyurethan (TPU) hergestellt. Für Anwendungen, bei denen eine Sitzblase nur gelegentlich verstellt wird und die Verstellung auch langsam erfolgen kann, z.B. eine Lordosenstütze, sind die bekannten Sitzblasen vollkommen ausreichend.

Heutige Fahrzeugsitze weisen jedoch gestiegene Anforderungen an Komfort und damit viele zusätzliche Funktionen auf, welche in den letzten Jahren auf den Markt gekommen sind. Z.B. werden in einem fahrdynamischen Sitz Sitzblasen je nach Kurvenfahrt des Kraftfahrzeuges befüllt oder entleert. Aktive Massagesysteme in Fahrzeugsitzen werden oft im Dauerbetrieb bedient. Derartige Fahrzeugsitze benötigen dann Sitzblasen, die erheblich schneller und/oder mit höheren Drücken bedient werden müssen. Auch ergibt sich eine hohe Dauerbelastungen, z.B. durch eine deutlich gestiegene Anzahl von Befüll- und Entlüftungszyklen. Derartige Anforderung werden von heute verwendeten Materialien für Blasenwände bzw. Sitzblasen nicht oder nur mit Einschränkungen erfüllt. Bekannt ist z.B. ein Versagen derartiger Materialien bei Temperaturen unter -40° oder über 80°C.

Aus der WO 2006/060262 A1 ist ein coextrudierter Mehrschichtaufbau einer Folie bekannt, welche eine höhere mechanische Stabilität und verbessertes Temperaturverhalten aufweist und daher als Material für Blasenwände geeignet wäre. Die bekannte Folie wird jedoch in der Regel in einem Blasverfahren hergestellt, muss deshalb frei von Recyclat sein, und ist daher hochpreisig.

Aufgabe der Erfindung ist es, ein verbessertes pneumatisches Stellelement anzugeben.

Die Erfindung beruht auf folgenden Überlegungen bzw. Untersuchungen: Falls die Blasenwand aus einem einschichtig aufgebauten Material hergestellt werden soll, ergeben sich folgende Forderungen: Um einerseits ein Reißen der Sitzblase zu verhindern, sollte die Blasenwand möglichst dick ausgeführt werden. Durch eine Berstdruckuntersuchung kann ermittelt werden, dass sich Blasenwand- bzw. Foliendicken von über 0,45mm als notwendig erweisen. Hohe Temperaturen verschärfen das Problem des Berstens.

Bei einer mehrteilig aufgebauten Sitzblase ergeben sich zwangsläufig Nahtstellen, die beim Befüllen/Entleeren der Sitzblase eine Knickstelle darstellen. Für die Dauerlauffestigkeit durch häufiges Be- und Entlüften muss die Blasenwand andererseits aber - z.B. an den o.g. Knickstellen - möglichst dünn ausgeführt werden. Untersuchungen liefern hierbei maximale Schichtdicken von 0,38mm, wobei die Dauerlauffestigkeit bei tiefen Temperaturen verschärft problematisch wird.

Diese Forderungen widersprechen sich. Die Erfindung beruht daher auf der Erkenntnis, dass die Nachteile der bekannten Stellelemente durch eine Einstellung der Dicke der Blasenwände alleine nicht zu beseitigen sind.

Die Aufgabe wird daher gelöst durch ein pneumatisches Stellelement umfassend eine wenigstens zwei Blasenwände aufweisende, zur Konturverstellung eines Fahrzeugsitzes befüllbare Sitzblase. Erfindungsgemäß sind die Blasenwände zumindest teilweise aus einem Verbundmaterial aufgebaut. Das Verbundmaterial umfasst eine dehnbare Grundschicht und ein verstärkendes Faserelement, welches eventuell ebenfalls dehnbar sein kann. Das Faserelement ist hierbei im Inneren der Grundschicht angeordnet oder - bezüglich der gesamten Sitzblase gesehen - an der Außenseite der Grundschicht angeordnet. Mit anderen Worten kann die Blasenwand also auch in Sandwichbauweise aus einer oder zwei faserfreien Grundschichten und einer faserdurchsetzten Faserschicht aufgebaut sein, wobei dann bei der Fertigung der Sitzblase die Blasenwand immer so orientiert wird, dass zumindest eine der faserfreien Grundschichten die innere Oberfläche der Sitzblase bildet. Durch den Einsatz einer preisgünstigen Grundschicht zusammen mit einem preisgünstigen verstärkenden Faserelement erhält man eine im Vergleich zu einem Mehrschichtaufbau preisgünstige Folie für die Blasenwände.

Durch eine geeignete Kombination von Schichtdicke der Grundschicht und Stärke bzw. Dicke des Faserelementes sowie einer geeigneten Verbindungstechnik für beide Komponenten erhält man so eine kostengünstige, reißfeste und knickstabile Folie, die optimal auf die Belastungen des Stellelements, z.B. in einem o.g. fahrdynamischen Sitzsystem, eingestellt werden kann.

Die so entstehenden Folien sind prinzipiell als technische Textilien z.B. für Zeltwände oder Rettungsinseln bekannt und weisen aufgrund der Stabilisierung durch das Faserelement eine extrem hohe Reißfestigkeit über den geforderten Temperaturbereich auf.

Das Faserelement kann in einer bevorzugten Ausführungsform ein Gewebe aus Einzelelementen bzw. einzelnen Fasern sein. Durch die Gewebestruktur ist dieses ausreichend stabil, um die Sitzblase entsprechend zu verstärken. Durch eine geeignete Webart lässt sich die so entstehende Blasenwand an verschiedene Anforderungen für das Stellelement anpassen.

Da ein Gewebe in der Regel kreuzweise gewobene parallel verlaufende Fasern enthält, ist bei dehnfesten Fasern auch das Gewebe in der jeweiligen Faserverlaufsrichtung nicht dehnbar. In diesem Fall können daher in einer weiteren bevorzugten Ausführungsform der Erfindung insbesondere die Einzelelemente bzw. Fasern dehnbar sein, damit ein insgesamt dehnbares Gewebe bzw. Faserelement entsteht.

In einer zu einem Gewebe alternativen Ausführungsform kann das Faserelement auch ein Gewirke aus Einzelelementen sein. Hierbei ist alleine durch die Wirkform eine Dehnbarkeit des Faserelementes erreichbar, auch wenn die Einzelfaser bzw. das Einzelelement dehnfest ist.

In einer weiteren Ausführungsform kann die Grundschicht einen Thermoplasten, z.B. thermoplastisches Polyurethan oder thermoplastisches Polyethylen, enthalten oder vollständig aus einem derartigen Material bestehen. Eine zwei Blasenwänden einer Sitzblase verbindende Schweißnaht befindet sich in der Regel an der Innenseite der Blase. Verschweißt wird also die dem Inneren der Blase zugewandte Seite der Blasenwand. Da sich dort stets die Grundschicht befindet, lassen sich bei einer thermoplastischen Grundschicht die vorhandenen Fertigungseinrichtungen zur Fertigung der Sitzblase weiterbenutzen. Fertigungstechnisch sind hierbei also keine Änderungen gegenüber bekannten Sitzblasen aus reinem Thermoplast notwendig.

Enthält bzw. besteht das Faserelement aus Polyamid, z.B. Polyamid 6.6, ergibt sich insbesondere in Materialkombination mit dem genannten thermoplastischen Polyurethan ein besonders geeignetes Verbundmaterial als Blasenwand.

Grundschicht und Faserelement können in einer weiteren Ausführungsform aufeinander laminiert oder miteinander coextrudiert sein. So kann durch eine kostengünstige Verbindungstechnik das Verbundmaterial hergestellt werden, was zu einer Kostenreduktion des Stellelements beiträgt.

Mindestens eine der Blasenwände ist in einer bevorzugten Ausführungsform vollständig aus dem Verbundmaterial aufgebaut. Vor allem für mehrteilige Sitzblasen, bei denen eine Blasenwand ein Einzelteil darstellt und anderen Blasenwänden z.B. randverschweißt wird, ergibt sich so der Vorteil, dass das Verbundmaterial und damit auch das Faserelement bis in eine Schweißnaht der Sitzblase reicht. Dort wird die Grundschicht der Sitzblase derart verstärkt, dass die Sitzblase Dauerbelastungen durch häufiges Be- und Entlüften gewachsen ist, also es nicht zu Brüchen im Auslauf der Schweißnaht kommt.

Für eine weitere Beschreibung der Erfindung wird auf die Ausführungsbeispiele der Zeichnungen verwiesen. Es zeigen, jeweils in einer schematischen Prinzipskizze:
- Fig. 1: einen Fahrzeugsitz mit Stellelement gemäß der Erfindung,
- Fig. 2: als Detail II den Rand der Sitzblase aus Fig. 1,
- Fig. 3: Ausführungsformen des Faserelements aus Fig. 2 als (a) Gewebe aus dehnbaren und (b) Gewirke aus dehnfesten Fasern.

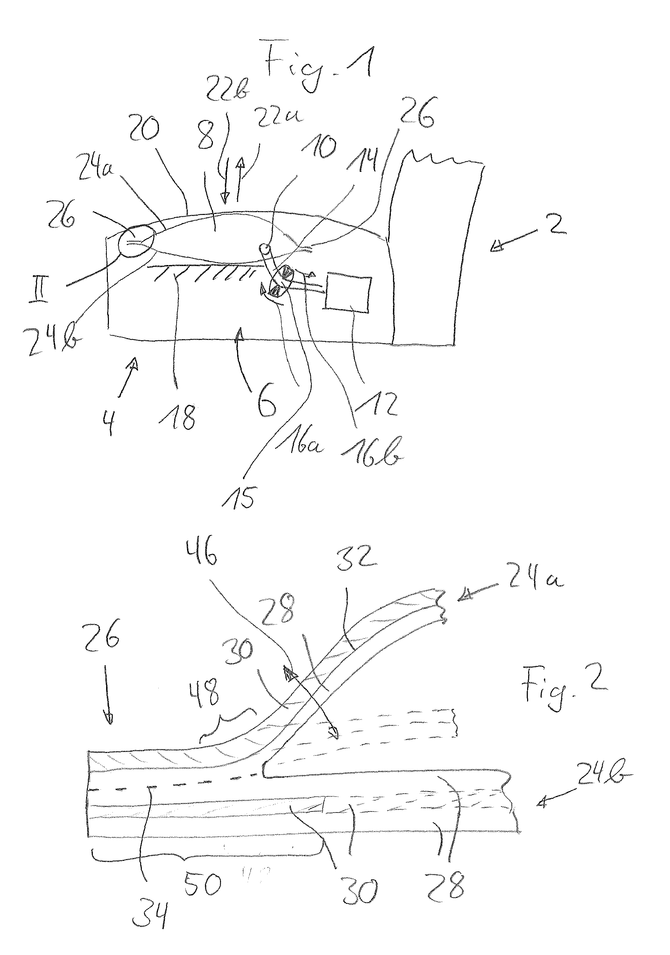

Fig. 1 zeigt einen Fahrzeugsitz 2, in dessen Sitzfläche 4 im Bereich der nicht dargestellten Seitenwangen ein fahrdynamisches pneumatisches Stellelement 6 eingebaut ist. Das Stellelement 6 umfasst eine Sitzblase 8, an deren Einlassöffnung 10 eine Pumpe 12 über einen Schlauch 14 angeschlossen ist.

Über die Pumpe 12 und Betätigung der Belüftungsseite eines Ventils 15 kann die Sitzbase 8 in Richtung des Pfeils 16a mit Luft befüllt werden. Die Sitzblase 8 stützt sich im Fahrzeugsitz 2 an der Sitzrahmenstruktur, dargestellt durch die Stützfläche 18, ab. Die Oberseite 20 des Sitzes 2 hebt sich daher in Richtung des Pfeils 22a schräg nach oben bzw. ein darauf sitzender Passagier erfährt einen stärkeren Unterstützungsdruck an der Stelle der Sitzblase 8. Durch Betätigung der Entlüftungsseite des Ventils 15 gegen Atmosphäre wird in Richtung des Pfeils 16b Luft aus der Sitzblase 8 entnommen. Die Oberseite 20 bewegt sich dann in Richtung des Pfeils 22b schräg nach unten bzw. entlastet den Passagier.

Die Sitzblase 8 ist zweiteilig aufgebaut, nämlich aus einer Vorderwand 24a und einer Rückwand 24b. Vorderwand 24a und Rückwand 24b sind an ihren jeweiligen Rändern 26 luftdicht miteinander verschweißt.

Fig. 2 zeigt im Detail II aus Fig. 1 den Randbereich der Sitzblase 8. Die Vorderwand 24a ist hierbei in einer ersten Ausführungsform der Erfindung aus einer Grundschicht 28 und einem Faserelement 30 in Form einer Faserschicht aufgebaut, wobei Vorder- 24a und Rückwand 24b so orientiert sind, dass stets das Faserelement 30 an der Außenseite 32 der Grundschicht 28 zu liegen kommt. Das Faserelement 30 ist an der Grundschicht 28 befestigt, z.B. auf diese auflaminiert.

Die Rückwand 24b dagegen ist gemäß einer zweiten Ausführungsform der Erfindung derart aufgebaut, dass das Faserelement 30 im Inneren 52 der Grundschicht 28 eingebunden, z.B. darin vergossen bzw. zusammen mit dieser koextrudiert ist. Der Aufbau kann auch so angesehen werden, dass eine das Faserelement tragende Faserschicht beidseitig von einer Grundschicht bedeckt ist.

Für beide Ausführungsformen ist im Bereich des Randes 26, also an der Stelle der Verschweißung 34 von Vorderwand 24a und Rückwand 24b jeweils eine Grundschicht 28 einander zugewandt. Die Grundschichten 28 sind dort unter Ausbildung eines Schmelzeverbands verschweißt, da das Faserelement im Inneren 52 oder an der Außenseite 32 des Grundmaterials 28 liegt.

In Fig. 2 ist dargestellt, wie sich beim Befüllen oder Entleeren der Sitzblase 8 die Vorderwand 24a in Richtung des Doppelpfeils 46 von der Rückwand 24b weg oder zu dieser hin bewegt (gestrichelt dargestellt). Der Bereich 48 stellt einen Anschlussbereich an die Verschweißung 34 zum Inneren der Sitzblase 8 hin dar. Dort ist die Vorderwand 24a daher einer erheblichen Knickbelastung ausgesetzt. Durch das Faserelement 30 ist die Vorderwand 24a ausreichend stabilisiert, um eine ausreichende Anzahl an Wiederholungen der betreffenden Bewegung zu widerstehen, ohne an dieser Stelle zu knicken bzw. zu brechen. Da nur die Vorderwand 24a der Knickbelastung ausgesetzt ist, kann in einer alternativen, nicht dargestellten Ausführungsform die Rückwand 24b auch ohne Faserelement ausgeführt sein.

In einer weiteren Ausführungsform kann eine der Wände der Sitzblase 8, im Beispiel z.B. die Rückwand 24b auch nur im Bereich 50, d.h. nur zu einem Teil, mit einem Faserelement 30 verstärkt sein, wobei dieses in der restlichen Rückwand 24b nicht weiter enthalten ist (gestrichelt dargestellt). Somit ergibt sich für die Rückwand 24b lediglich eine entsprechende lokale Verstärkung im Bereich des Randes 26 bzw. der Verschweißung 34.

Alternativ und ebenfalls nicht dargestellt könnte das Faserelement 30 auch unter Ausnahme des Bereiches 50 im gesamten restlichen Bereich der Rückwand 24b vorliegen. Damit ergibt sich eine Verstärkung nur im Wirkbereich der Sitzblase 8. In beiden Fällen ist im Gegensatz zur Vorderwand 24a damit die Rückwand 24b nicht vollständig aus dem Verbundmaterial aus Grundschicht 28 und Faserelement 30 aufgebaut.

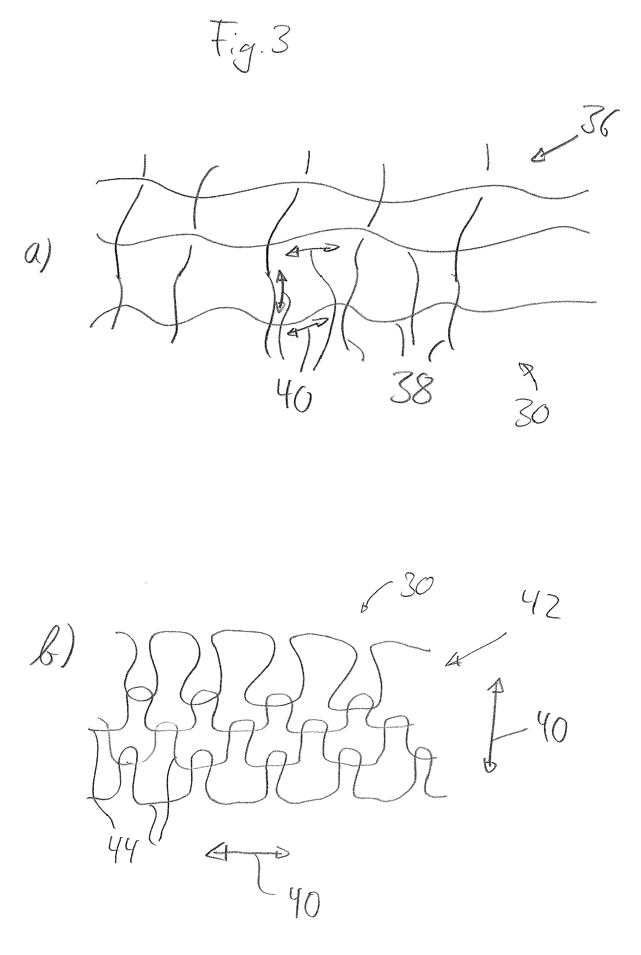

Fig. 3 zeigt zwei Ausführungsformen für das Faserelement 30, welches gemäß Fig. 3a ein Gewebe 36 aus in sich elastischen Fasern 38 ist. Jede einzelne Faser 38 ist daher in Richtung des Doppelpfeils 40, also in Faserrichtung, dehnbar bzw. kann sich wieder zusammen ziehen. Das bezüglich seiner Struktur in der jeweiligen Faserrichtung starre bzw. dehnfeste Gewebe 36 wird dadurch insgesamt flexibel bzw. dehnbar.

In Fig. 3b ist das Faserelement 30 ein Gewirke 42 von in sich nicht elastischen, also dehnfesten Fasern 44. Obwohl die einzelnen Fasern 44 in ihrer Längsrichtung also dehnfest sind, entsteht durch die Wirkform des Gewirkes 42 ein entlang der Pfeile 40 dennoch in seiner Gesamtheit dehnbares Faserelement 30.

## Patentansprüche

1. Pneumatisches Stellelement (6), umfassend eine wenigstens zwei Blasenwände (24a,b) aufweisende, zur Konturverstellung (22a,b) eines Fahrzeugsitzes (2) befüllbare Sitzblase (8),
**dadurch gekennzeichnet, dass** die Sitzblase (8) zumindest teilweise aus einem Verbundmaterial aus einer dehnbaren Grundschicht (28) und einem verstärkenden Faserelement (30) aufgebaut ist, wobei das Faserelement (30) im Inneren (52) und/oder bezüglich der Sitzblase (8) an der Außenseite (32) der Grundschicht (28) angeordnet ist.

2. Stellelement (6) nach Anspruch 1, **dadurch gekennzeichnet, dass** das Faserelement (30) ein Gewebe (36) aus Einzelelementen (38) ist.

3. Stellelement (6) nach Anspruch 2, **dadurch gekennzeichnet, dass** das Einzelelement (38) dehnbar (40) ist.

4. Stellelement (6) nach Anspruch 1, **dadurch gekennzeichnet, dass** das Faserelement (30) ein Gewirke (42) aus Einzelelementen (44) ist.

5. Stellelement (6) nach Anspruch 4, **dadurch gekennzeichnet, dass** das Einzelelement (44) dehnfest ist.

6. Stellelement (6) nach einem der vorhergehenden Ansprüche, **dadurch gekennzeichnet, dass** die Grundschicht (28) ein Thermoplast enthält.

7. Stellelement (6) nach einem der vorhergehenden Ansprüche, **dadurch gekennzeichnet, dass** das Faserelement (30) Polyamid enthält.

8. Stellelement (6) nach einem der vorhergehenden Ansprüche, **dadurch gekennzeichnet, dass** Grundschicht (28) und Faserelement (30) aufeinander auflaminiert oder miteinander koextrudiert sind.

9. Stellelement (6) nach einem der vorhergehenden Ansprüche, **dadurch gekennzeichnet, dass** mindestens eine der Blasenwände (24a,b) vollständig aus dem Verbundmaterial aufgebaut ist.
